Europäisches Patentamt

European Patent Office

Office européen des brevets

(11) Veröffentlichungsnummer: **0 223 233**
A2

# (12) EUROPÄISCHE PATENTANMELDUNG

(21) Anmeldenummer: 86115989.5

(22) Anmeldetag: 18.11.86

(51) Int. Cl.⁴: **B 29 C 33/60**
// (B29K75/00, 105:04)

(30) Priorität: 21.11.85 DE 3541513

(43) Veröffentlichungstag der Anmeldung: 27.05.87
Patentblatt 87/22

(84) Benannte Vertragsstaaten: AT BE CH DE ES FR GB IT LI LU NL SE

(71) Anmelder: Teroson GmbH, Hans-Bunte-Strasse 4,
D-6900 Heidelberg 1 (DE)

(72) Erfinder: Fischer, Wolfgang, Dr., Hellklingerstrasse 31,
D-6920 Mörlenbach (DE)
Erfinder: Hättich, Thomas, Dr., Häuselgasse 39,
D-6900 Heidelberg (DE)
Erfinder: Krug, William, Laubenweg 7,
D-6900 Heidelberg 1 (DE)
Erfinder: Schuster, Gerhard, Pachelbelstrasse 56,
D-8500 Nürnberg (DE)

(74) Vertreter: UEXKÜLL & STOLBERG Patentanwälte,
Beselerstrasse 4, D-2000 Hamburg 52 (DE)

(54) Verfahren zur Herstellung von Gegenständen aus Polyurethanschaum, Additiv für die Durchführung dieses Verfahrens sowie wässriges Trennmittel.

(57) Es wird ein Verfahren zur Herstellung von Gegenständen aus Polyurethanschaum beschrieben, bei dem der Gegenstand in herkömmlicher Weise durch Schäume in einer Form hergestellt und auf die Formoberfläche vor der Beschickung mit den schaumbildenden Komponenten ein Trennmittel aufgebracht wird. Erfindungsgemäss wird ein lösungsmittelfreies wässriges Trennmittel in Kombination mit einem oder mehreren Alkali- und/oder Ammoniumsalzen von höheren Fettsäuren und einem oder mehreren höheren Alkoholen verwendet und die Kombination in heissem Zustand, vorzugsweise mit einer Temperatur von mindestens 75 °C auf die Formoberfläche aufgebracht. Beschrieben wird ferner ein Additiv, das für die Durchführung des erfindungsgemässen Verfahrens geeignet ist und ein oder mehrere Alkali- und/oder Ammoniumsalze höherer Fettsäuren, einen oder mehrere höhere Alkohole und im übrigen Wasser enthält. Das erfindungsgemässe Verfahren hat den Vorteil, dass es nicht nur den Einsatz von der Umwelt belastenden organischen Lösungsmitteln vermeidet, sondern zu ausgezeichneten Trennmitteln führt, aus denen das Wasser weitestgehend innerhalb kürzester Zeit, und zwar innerhalb der sehr kurzen Taktzeiten moderner Schaumanlagen abdunstet.

Die Erfindung betrifft ein Verfahren zur Herstellung von
Gegenständen aus Polyurethanschaum, bei dem der Gegenstand
in herkömmlicher Weise durch Schäumen in einer Form
hergestellt und die Form vor der Beschickung mit den
schaumbildenden Komponenten mit einem Trennmittel
behandelt wird.

Die Herstellung von Gegenständen aus Polyurethanschaum
erfolgt in Formen und kann nach den verschiedensten, aus
dem Stand der Technik bekannten Verfahren erfolgen. Sowohl
hinsichtich der dabei einzusetzenden, den Schaum bildenden
Komponenten als auch hinsichtlich der einzusetzenden
Vorrichtungen und Formwerkzeuge gibt es eine große
Vielfalt von Variationsmöglichkeiten, die dem Fachmann
geläufig sind. In der Regel erfolgt die Beschickung der
Form entweder im offenen oder geschlossenen Zustand durch
einen Einschußkanal mit den über einen Mischkopf vermengten Polyol- und Isocyanat-Komponenten. Neben dem angestrebten Produkt und dessen gewünschten Eigenschaften richtet
sich die Zusammensetzung der Komponenten danach, ob nach
dem Einstufenverfahren (Direktverfahren) oder nach dem
Zweistufenverfahren (Präpolymerverfahren oder Semipräpolymerverfahren) gearbeitet wird. Alle diese verschiedenen
möglichen Verfahrensweisen sind in der Literatur ausführlich beschrieben, so daß sich ein detailliertes Eingehen
darauf erübrigt. Es sei hierzu beispielsweise auf
"Integralschaumstoffe", Piechota und Röhr, 1975; Kunststoff-Handbuch, Band VII, "Polyurethane", 1966; "Schaumkunststoffe", herausgegeben vom Fachverband Schaumkunststoffe in GKV, 1976 und Wittfoht, Kunststoff-Technisches
Wörterbuch, Teil 3, verwiesen.

Zwecks leichter und sauberer Entnahme der in den aus
Metall, Holz oder Kunststoff bestehenden Formen auspolymerisierten Schaumgegenstände werden die mit den
schaumbildenden Komponenten bzw. dem Polyurethanschaum in
Kontakt tretenden Formoberflächen vor der Beschickung der
Form mit Trennmitteln (Formtrennmittel) behandelt. Zu
diesem Zweck werden die Werkzeugoberflächen unter
Erzeugung eines Trennfilms mit einer gleichmäßigen
Beschichtung durch ein Trennmittel versehen. Dies
geschieht üblicherweise nach den bekannten spritz- und
sprühtechnischen Verfahren, wobei das Trennmittel entweder
durch hohen Materialdruck oder zusätzliche Druckkraft
zerstäubt wird. Neben guten Entformungseigenschaften muß
das Trennmittel in speziellen Fällen darüber hinaus einen
Einfluß hinsichtlich der Oberflächenbeschaffenheit des
fertigen Polyurethanschaumgegenstandes ausüben können. So
werden durch bestimmte Zusätze, beispielsweise auf dem
Kaltweichschaumsektor (Sitze, Nackenstützen, Armlehnen
usw. in Autos) Offenzelligkeit und dadurch die geforderte
"Atmungsfähigkeit" des Schaumgegenstandes erzeugt.

Herkömmliche Trennmittel bestehen aus organischen Lösungsmitteln, und darin gelösten, dispergierten, suspendierten
oder emulgierten trennwirksamen Substanzen, die in ihrer
Gesamtheit als Festkörper bezeichnet werden. Dieser
kann, wie dem Fachmann geläufig, Wachse, Fette, Silikonverbindungen, Fettsäureamide, Fettsäureester, Weichmacher,
Stabilisatoren, Beschleuniger usw. enthalten. Die im
Trennmittel überwiegend vorhandenen Lösungsmittel wie
beispielsweise Frigen, Methylenchlorid, Trichlorethan,
Perchlorethylen, Benzine und hochsiedende Benzinkohlenwasserstoffe dienen als Träger, um die trennwirksamen
Substanzen als gleichmäßigen Trennfilm auf die Werkzeugoberfläche aufzubringen.

Festkörperzusammensetzung, Festkörperanteil und Lösungsmittelkombination werden in Abhängigkeit von der Formentemperatur, der Ablüftezeit (Zeit vom Trennmittelauftrag bis
zum Komponenteneintrag) und jeweiligen Schaumsystem
(Integral-, Hartintegral-, Kaltweichschaum) konzipiert.
Auf diese Weise können die verschiedensten Gegenstände mit
sehr unterschiedlichen Eigenschaften hergestellt werden.
So wird beispielsweise Integralschaum zur Herstellung von
Lenkrädern für Automobile verwendet, wobei spezielle
Anforderungen an die Oberfläche (Gleichmäßigkeit und gute
Griffeigenschaften) gestellt werden. Die Formtemperatur
liegt bei der Herstellung von Integralschaum in der Regel
zwischen 30 und 50$^{\circ}$C. Demgegenüber liegt die Temperatur
des Formwerkzeugs beim RIM-Verfahren (RIM-Schaum), das
häufig zur Herstellung von polierten Formteilen verwendet
wird, bei 50 bis 70$^{\circ}$C. Ähnliche Temperaturen, nämlich im
Bereich von 40 bis 70$^{\circ}$C, weisen die Formwerkzeuge bei der
Herstellung von Gegenständen als Kaltweichschaum, wie
Sitzen, Kopfstützen und Armlehnen für Automobile auf. Bei
der Herstellung von Gegenständen aus Hartschaum wie
Konsolen für Automobile, Fensterläden, Kühlschrankelementen, Möbelteilen und Stühlen beträgt die Temperatur in der
Regel 30 bis 50$^{\circ}$C.

Beim Trennmitteleintrag, der in dem meisten Fällen mittels
einer Spritz- bzw. Sprühvorrichtung erfolgt, verdampfen
die Lösungsmittel weitgehend als azeotropes Gemisch von
der je nach vorliegemdem Schaumsystem zwischen 25 und 70$^{\circ}$C
erwärmten Werkzeugoberfläche. Gemeinsam mit dem Overspray
werden diese Dämpfe über entsprechende Absauganlagen aus
dem Arbeitsfeld entfernt. Abgesehen vom Verlust wertvoller
Rohstoffe ist in diesen Schadstoffemissionen eine
bedeutende Umweltbelastung zu sehen. Recycling-Verfahren
wären mit Adsorptionsanlagen denkbar, jedoch stellen hier die in fein verteilter Form vorliegenden Feststoffanteile, die weder über Filter noch Wasserwände eliminiert werden können, ein großes Problem dar. Die sofort mit einer aus Wachs und Fett belegten Adsorptionsschichten müßten in kürzesten Zeitabständen regeneriert werden, was einen enormen arbeitsmäßigen und finanziellen Aufwand bedeutet.

Aufgrund der geschilderten Probleme wird schon seit geraumer Zeit angestrebt, Trennmittel auf wässriger Basis einzusetzen, d.h. Trennmittel, bei denen organische Lösungsmittel weitgehend und vorzugsweise vollständig durch Wasser ersetzt sind. Lösungsmittelarme bzw. lösungsmittelfreie Trennmittel sind bekannt. Es handelt sich dabei im wesentlichen um Fett-, Wachs- oder Seifenemulsionen bzw. -dispersionen. Bei diesen Trennmitteln besteht das Problem, daß nach dem Trennmittelauftrag die Beschickung der Form mit den schaumbildenden Komponenten bei den meisten der oben beschriebenen Schaumsysteme erst dann erfolgen kann, wenn das Lösungsmittel, hier das Wasser, weitestgehend abgedunstet ist, damit der Polymerisationsvorgang nicht störend beeinflußt wird.

Der Grund dafür, daß unzureichendes Abdunsten des Wassers bei Verwendung wässriger Trennmittel zu Produkten geringerer Qualität führt, besteht in der parallel zur Polyol-Isocyanatreaktion ablaufenden Konkurrenzreaktion zwischen Wasser und Isocyanatgruppen ($R-N=C=O + H_2O \rightarrow R-NH_2 + CO_2$), die Kohlendioxid freisetzt und das genau abgestimmte Polyol/Isocyanat-Verhältnis partiell verschiebt. Dies führt zu Schaumstörungen in Form von Verfärbungen über Blasen, Lunkerbildungen (Gaseinschlüsse) bis hin zum teilweisen Schaumkollaps. Da für das Abdunsten von Trennmittelfilmen aufgrund der systembedingten Umlauftakte moderner Schaumanlagen üblicherweise nur 10 bis 50 Sekunden bei Temperaturen von maximal 65°C vorgegeben sind, was erwiese-

nermaßen für eine genügende Eliminierung des Wassers aus
dem mehr oder weniger stark wasserbindenden Trennfilm unzureichend ist, können bei den meisten der heutigen Schaumtechnologien wässrige Trennmittel nicht eingesetzt werden.

Bekannt ist der Einsatz wässriger Trennmittel für den fast
schon überholten Bereich der Heißverschäumung, wo hohe energieaufwendige Formtemperaturen das Abdunsten des Wassers bewirken.
Ferner werden wässrige Trennmittel dort eingesetzt, wo an
die Oberflächenqualität der gefertigten Schaumteile nur geringe
Anforderungen gestellt werden, da ihre Oberflächen keine
Sichtflächen darstellen. Als Beispiel sei die Hinterschäumung
genannt.

Um wässrige Trennmittel wirtschaftlich auch in anderen Bereichen einsetzen zu können, hat man diesen zur Reduzierung
der Ablüftezeiten Verdunstungsbeschleuniger in Mengen von
etwa 10 bis 30% zugesetzt. Hierbei handelt es sich um niedrigsiedende Alkohole, Ketone, Ester usw., welche abgesehen von
möglichen Störreaktionen mit dem Isocyanat auch weiterhin
eine erhebliche Umweltbelastung darstellen. Der Einsatz solcher
teils wässrigen teils lösungsmittelhaltigen Systeme hat sich
ebenfalls in der Praxis bisher nicht durchsetzen können.

Der Erfindung liegt dementsprechend die Aufgabe zugrunde,
durch Beseitigung der mit dem schlechten Abdunstverhalten
des Wassers einhergehenden Nachteile die Verwendung wässriger
Trennmittel wirtschaftlich und umweltbezogen auch für solche
Schaumsysteme zu ermöglichen, die bisher aufgrund der Kürze
der anlagen- und systembedingten Taktzeiten einen solchen
Einsatz nicht zuließen.

Zur Lösung dieser Aufgabe wird ein Verfahren zur Herstellung
von Gegenständen aus Polyurethanschaum der eingangs genannten
Art vorgeschlagen, das dadurch gekennzeichnet ist, daß man ein lösungsmittelfreies wässriges Trennmittel in Kombination mit einem oder mehreren Alkali- und/oder Ammoniumsalzen von höheren $C_{18}$-$C_{30}$-Fettsäuren und einem oder mehreren höheren $C_4$-$C_{26}$-Alkoholen verwendet und die Kombination in heißem Zustand auf die Formoberfläche aufbringt.

Es wurde überraschend gefunden, daß das erfindungsgemäße Verfahren zu einer drastischen Verkürzung der Abdunstzeit der aufgebrachten Trennfilme und zu einer weitestgehenden Entfernung des Wassers aus dem Trennmittelfilm führt. Dies ist umso überraschender, als die an sich als Trennmittel bekannten Seifenemulsionen beim Abdunstungsvorgang zu einer wasserhaltenden Micellbildung führen. Ferner ist es überraschend, daß die bei Verwendung üblicher Emulgatoren auftretenden wasserbindenden pseudokristallinen Strukturen durch die erfindungsgemäße Vorgehensweise anscheinend aufgehoben werden. Die erfindungsgemäß verwendete Kombination stellt im heißen Zustand jedenfalls ein dünnflüssiges Trennmittel dar, das einen gleichmäßigen Trennmittelfilm bildet, aus dem das Wasser innerhalb der oben genannten kurzen Taktzeiten von industriellen Schaumanlagen weitestgehend abdunstet.

Hinsichtlich der beim erfindungsgemäßen Verfahren verwendbaren wässrigen Trennmittel, die vollständig oder zumindest im wesentlichen frei von organischen Lösungsmitteln sind, bestehen keine Beschränkungen, d.h. sie liegen in Form von Emulsionen bzw. Dispersionen vor und enthalten übliche trennwirksame Substanzen als Festkörper (siehe oben), die in die wässrige Basis eingearbeitet werden. Dies erfolgt nach den in der Emulsions- und Dispersionstechnik üblichen Verfahren (vgl. z.B. Seifen-Öle-Fette-Wachse, 107. Jahrgang, Nr. 14, 1981, Seiten 391 bis 402). In der Regel wird das Wasser oder zumindest ein Teil des Wassers vorgelegt, und dann werden die verschiedenen trennwirksamen Substanzen sowie gegebenenfalls übliche Zusätze (siehe unten) zu diesen Substanzen eingearbeitet, wobei erforderlichenfalls Emulgatoren verwendet werden. Die Reihenfolge der Einarbeitung der trennwirksamen Substanzen kann beliebig gewählt werden. Außerdem können selbstverständlich zur Erleichterung des Emulgiervorganges auch erhöhte Temperaturen angewandt werden. Nähere Erläuterungen hierzu sind nicht erforderlich, da der Fachmann in der Lage ist, die Zusammensetzung des Trennmittels entsprechend den jeweiligen Anforderungen zu konzipieren und die jeweils günstigste Verfahrensweise für die Herstellung der so konzipierten Trennmittels zu wählen.

Als besonders geeignet für das erfindungsgemäße Verfahren haben sich wässrige Trennmittel erwiesen, die als trennwirksame Substanz Fettsäureamide, vorzugsweise $C_{18}$-$C_{30}$-Fettsäureamide, und/oder Fettsäureester wie Fettsäureester von linearen oder verzweigten $C_1$-$C_{22}$-Alkoholen oder Polyolen (z.B. Polyethylenglykol, Glycerin usw.) und/oder synthetische und/oder natürliche Wachse wie Mikrowachs und insbesondere Polyethylenwachs enthalten. Die Auswahl des jeweils geeigneten Fettsäureamids und/oder Fettsäureesters und/oder Wachses liegt im Bereich des Könnens des Fachmanns und richtet sich nach dem jeweiligen Anwendungsgebiet. So werden beispielsweise für die Kaltweichschaumanwendung weichere (niedriger schmelzende) Wachse als bei der Herstellung von Gegenständen aus Integralschaum eingesetzt.

Wie schon oben erwähnt, können die erfindungsgemäß verwendeten wässrigen Trennmittel weitere übliche Bestandteile enthalten. Zu diesen gehören u.a. Biozide, auf das System abgestimmte Polyurethanschaumstabilisatoren wie z.B. Silikonglykole bzw. Polysiloxanglykole und Beschleuniger wie die auch in den zum Stand der Technik gehörenden Lösungsmittelsystemen verwendeten Zinnbeschleuniger (z.B. Dibutylzinndilaurat) und Aminbeschleuniger (z.B. Bis-(2-dimethyl-aminoethyl)-ether). Zur Erzielung der bei Kaltweichschaum häufig erforderlichen Offenzelligkeit (siehe oben)
können beispielsweise im Handel erhältliche Glykolsiloxantenside (Silikon/Glykol-Copolymere) eingearbeitet werden.
Diese wasserlöslichen Tenside können allerdings auch der
Polyolkomponente direkt zugesetzt werden.

Das Additiv, das erfindungsgemäß mit dem wässrigen Trennmittel kombiniert wird, besteht aus einer wässrigen Lösung
von einem oder mehreren Alkali- und/oder Ammoniumsalzen,
vorzugsweise Kaliumsalzen, höherer $C_{18}$-$C_{30}$- und vorzugsweise $C_{22}$-$C_{26}$-Fettsäuren und einem oder mehreren höheren
$C_4$-$C_{26}$-, vorzugsweise $C_4$-$C_{12}$- und insbesondere $C_6$-$C_{10}$-Alkoho-
len. Der Begriff "Ammoniumsalz" bezeichnet solche
Neutralisationsprodukte, die durch Umsetzung von Fettsäuren
in wässrigem Medium mit Ammoniak oder Aminen wie flüchtigen
Basen, z.B. Morpholin, Methylaminopropanol, Diethylaminoethanol usw., oder nicht-flüchtigen Basen, z.B.
Monoethanolamin, Triethanolamin, Isopropanolamin, $\alpha,\omega$- und
$\alpha,\gamma$-substituierten Diaminen wie Ethylendiamin, 1,2-Propylendiamin, 1,3-Propylendiamin, 1,4-Butylendiamin usw.
erhalten werden. Die Herstellung des Additivs erfolgt in
der Weise, daß das oder die Alkali- und/oder Ammoniumsalze
der höheren Fettsäuren oder höhere Fettsäure bzw.
Fettsäuren und Alkalilauge oder Ammoniak oder Aminlösungen
(siehe oben) sowie höherer Alkohol bzw. höhere Alkohole in
Wasser eingebracht werden und die Mischung dann unter
Rühren auf etwa 80°C erwärmt wird. Der Gehalt an höherem
Alkohol des so hergestellten Additivs beträgt 1 bis
12 Gew.%. Der Gehalt an Alkali- und/oder Ammoniumsalz
höherer Fettsäure liegt üblicherweise im Bereich von 1 bis
20 Gew.% und vorzugsweise 5 bis 9 Gew.%. Das Additiv wird
dem erfindungsgemäß verwendeten wässrigen Trennmittel in
Abhängigkeit von dessen Beschaffenheit und der vorgesehenen Anwendung in ausreichender Menge und normalerweise in einer Menge von 10 bis 50 Gew.% zugesetzt.

Alternativ können die Bestandteile des zuvor beschriebenen Additivs, nämlich das oder die Alkali- und/oder Ammoniumsalze höherer Fettsäuren und der oder die höheren Alkohole, dem wässrigen Trennmittel auch direkt zugegeben werden. Dies geschieht vorzugsweise unmittelbar vor Verwendung des Trennmittels, um ein zweimaliges Erwärmen zu vermeiden. Diese Verfahrensweise ist allerdings weniger bevorzugt als die Verwendung des zuvor beschriebenen Additivs.

Das wässrige Trennmittel und das erfindungsgemäß damit kombinierte Additiv werden unter Durchmischen zusammengegeben und üblicherweise in einem Durchlauferhitzer auf die gewünschte Temperatur von mindestens 75$^{o}$C und vorzugsweise mindestens 80$^{o}$C erwärmt. Dabei wird die erwärmte Kombination in der Praxis dauernd im Umlauf gehalten, also dauernd zirkuliert, um eine gleichförmige Durchmischung sicherzustellen und eine Abscheidung von Bestandteilen zu vermeiden. Die auf die gewünschte Temperatur erhitzte Kombination wird dann in üblicher Weise auf die Formoberfläche der Form aufgebracht, was vorzugsweise durch Aufsprühen erfolgt (siehe oben).

Wichtig ist, daß die Konzentration des oder der höheren Alkohole in der erfindungsgemäß verwendeten Kombination nicht größer als 6 Gew.% und vorzugsweise nicht größer als 4 Gew.% ist. Üblicherweise liegt die Konzentration dementsprechend im Bereich von 1 bis 6 Gew.%. Die Konzentration des oder der Alkali- und/oder Ammoniumsalze höherer Fettsäuren liegt, bezogen auf die Gesamtkombination, üblicherweise im Bereich von 0,5 bis 10 Gew.% und vorzugsweise 2 bis 7 Gew.%.

0 223 233

Wie bereits oben erwähnt, führt die Verwendung der erfindungsgemäßen Kombination aus wässrigem Trennmittel und Alkali- und/oder Ammoniumsalzen höherer Fettsäuren sowie höheren Alkoholen zu einer drastischen Verkürzung der Abdunstzeiten der aufgebrachten Trennmittelfilme und zu einer weitestgehenden Beseitigung des Wassers aus dem Trennmittelfilm. Dieser Effekt tritt nur dann auf, wenn das wässrige Trennmittel vermischt mit dem Additiv vor der Aufbringung auf mindestens 75°C erhitzt wird. Wahrscheinlich beruht dieser Effekt neben der Oberflächenspannungsreduzierung auf der Zerstörung der bei der Verwendung von herkömmlichen Seifenemulsionen erfolgenden wasserhaltenden Micellbildung sowie auf der Aufhebung ebenfalls wasserbindender pseudokristalliner Strukturen, die durch die Verwendung üblicher Emulgatoren verursacht werden. Hinzu kommt, daß eine Zerstörung der sonst bei diesen Temperaturen meist instabilen Emulsionen durch die stabilisierende Wirkung des erfindungsgemäß verwendeten Additivs verhindert wird. Das erfindungsgemäße Additiv hat als solches trennwirksame Eigenschaften und verbessert dadurch zusätzlich die Trennwirksamkeit der herkömmlichen Trennemulsionen.

Bei der Herstellung von Gegenständen aus Kaltweichschaum (Automobilteile) sind nach dem erfindungsgemäßen Verfahren mit dem folgenden wässrigen Trennmittel sehr gute Ergebnisse erzielt worden:

| | |
|---|---|
| Polyethylenwachs | 0,5 Gew.% |
| Emulgator (sekundäres lineares Alkansulfonat in Form des Natriumsalzes; 60% wirksame Substanz) | 1,3 Gew.% |
| Schaumstabilisator (siehe oben) | 0,3 Gew.% |
| Wasser | Rest |

Dieses wässrige Trennmittel wurde mit unterschiedlichen Mengen des folgendermaßen zusammengesetzten Additivs kombiniert:

| | |
|---|---|
| Behensäure | 8 Gew.% |
| KOH | 1,6 Gew.% |
| $C_6-C_{10}$-Alkohol | 4 Gew.% |
| Wasser | Rest. |

## Patentansprüche

1.  Verfahren zur Herstellung von Gegenständen aus Polyurethanschaum, bei dem der Gegenstand in herkömmlicher
    Weise durch Schäumen in einer Form hergestellt und auf
    die Formoberfläche vor der Beschickung mit den schaumbildenden Komponenten ein Trennmittel aufgebracht wird,
    **dadurch gekennzeichnet,** daß man ein lösungsmittelfreies
    wässriges Trennmittel in Kombination mit einem oder
    mehreren Alkali- und/oder Ammoniumsalzen von höheren
    $C_{18}$-$C_{30}$-Fettsäuren und einem oder mehreren höheren
    $C_4$-$C_{26}$-Alkoholen verwendet und die Kombination in heißem Zustand auf die Formoberfläche aufbringt.

2.  Verfahren nach Anspruch 1, **dadurch gekennzeichnet,** daß
    man den oder die höheren Alkohole, bezogen auf die Gesamtkombination, in einer Menge von maximal 6 Gew.% und vorzugsweise nicht mehr als 4 Gew.% verwendet.

3.  Verfahren nach Anspruch 1 oder 2, **dadurch gekennzeichnet,**
    daß man die Kombinatioln mit einer Temperatur von mindestens 75°C und vorzugsweise mindestens 80°C aufbringt.

4.  Verfahren nach einem der Ansprüche 1 bis 3, **dadurch
    gekennzeichnet,** daß man ein oder mehrere Alkali- und/oder
    Ammoniumsalze von höheren $C_{22}$-$C_{26}$-Fettsäuren verwendet.

5.  Verfahren nach einem der Ansprüche 1 bis 4, **dadurch
    gekennzeichnet,** daß man Kaliumsalze höherer Fettsäuren
    verwendet.

**0 223 233**

6. Verfahren nach einem der Ansprüche 1 bis 5, **dadurch gekennzeichnet,** daß man Kaliumbehenat als Alkalisalz höherer Fettsäuren verwendet.

7. Verfahren nach einem der Ansprüche 1 bis 6, **dadurch gekennzeichnet,** daß man höhere $C_6$-$C_{10}$-Alkohole verwendet.

8. Verfahren nach einem der Ansprüche 1 bis 7, **dadurch gekennzeichnet,** daß man das oder die Alkali- und/oder Ammoniumsalze höherer Fettsäuren, bezogen auf die Gesamtkombination, in einer Menge von 0,5 bis 10 und vorzugsweise 2 bis 7 Gew.% verwendet.

9. Verfahren nach einem der Ansprüche 1 bis 8, **dadurch gekennzeichnet,** daß man das wässrige lösungsmittelfreie Trennmittel in Form einer Emulsion oder Dispersion einsetzt, wobei es sich vorzugsweise um eine Emulsion oder Dispersion von synthetischen oder natürlichen Wachsen, insbesondere Polyethylenwachs, Fettsäureamiden, Fettsäureestern oder einer Kombination von zwei oder mehreren dieser Substanzen handelt.

10. Additiv für ein wässriges Trennmittel zur Durchführung eines Verfahrens zur Herstellung von Gegenständen aus Polyurethanschaum, **dadurch gekennzeichnet,** daß es ein oder mehrere Alkali- und/oder Ammoniumsalze höherer $C_{18}$-$C_{30}$- und vorzugsweise $C_{22}$-$C_{26}$-Fettsäuren, 1 bis 5 Gew.% eines oder mehrerer höherer $C_4$-$C_{26}$- und vorzugsweise $C_6$-$C_{10}$-Alkohole und im übrigen Wasser enthält.

11. Additiv nach Anspruch 10, **dadurch gekennzeichnet,** daß es 1 bis 20 und vorzugsweise 5 bis 9 Gew.% eines oder mehrerer Alkali- und/oder Ammoniumsalze höherer Fettsäuren enthält.

12. Wässriges Trennmittel für Verfahren zur Herstellung von Gegenständen aus Polyurethanschaum, **dadurch gekennzeichnet,** daß es das Additiv gemäß Anspruch 10 oder 11 enthält.